# EUROPEAN PATENT SPECIFICATION

(11) **EP 0 260 660 B1**
(45) Date of publication and mention of the grant of the patent: **28.04.1993**
(21) Application number: 87113483.9
(22) Date of filing: 15.09.1987
(51) Int. Cl.: C09D 127/18, C09D 5/12

(54) **A coating composition based on fluorinated polymers, to be used as a primer**
Beschichtungsmischung auf der Basis von fluorierten Polymeren zur Verwendung als Haftgrundmittel
Composition de revêtement à base de polymères fluorés utilisable comme apprêt

(30) Priority: 16.09.1986 IT 2170986
(43) Date of publication of application: 23.03.1988
(73) Proprietor: AUSIMONT S.p.A., I-20121 Milano (IT)
(72) Inventor: Fonte, Alberto, I-27100 Pavia (IT); Tentorio, Angelo, I-28100 Novara (IT); Visca, Mario, I-15100 Alessandria (IT)
(74) Representative: Barz, Peter, Dr.

(56) References cited:
- FR-A- 1 536 986
- US-A- 3 489 595
- US-A- 3 634 353
- CHEMICAL ABSTRACTS, vol. 83, no. 10, 08 September 1975, Columbus, OH (US); pp. 141-142, no. 81473v#

## Description

This invention relates to a compositions suitable for forming a coating layer on metal articles, in particular of iron or aluminium or their alloys, said coating layer having a very high adhesion to the metal substrate and being utilizable as primer for the application of subsequent finishing coating layers.

It is generally known to use aqueous polytetrafluoroethylene (PTFE) dispersions in order to obtain coatings exhibiting high stabilities to heat and to chemical agents along with good mechanical resistances to wear and to friction. It is known as well to use PTFE modified with small amounts of a comonomer, which in most cases is fluorinated, as well as to use mixtures of PTFE with other fluorinated polymers, in order to obtain improved imperviousness and flexibility of the coating layer. The essential technical problem in the production of these coatings consists in the adhesion thereof to the metal substrate, said adhesion having to be very high, also in consideration of the temperatures, often very high, which the articles are subjected to in use.

A good adhesion is attainable with the presence of chromic acid in the aqueous polymer dispersion, in particular in combination with phosphoric acid. This system cannot be employed if the treated articles are to be utilized in the foodstuffs sector, due to the high toxicity of chromic acid, which is present, although only in trace amounts, in the obtained polymeric coating layer.

From US-A-3,634,353 it is known how to use monobasic phosphates of divalent cations in combination with phosphoric acid for the preparation of coating compositions. In particular, calcium is stated to be the preferred cation.

In this patent it is of substantial importance, in order to obtain a good adhesion, that the molar ratio: cations/PO₄⁻⁻ is below 0.5/1.

Tests carried out by the Applicant hereof have proved that this limit is critical in order to obtain good adhesion (See example 1A).

FR-A-1 536 986 furthermore discloses a polytetrafluoroethylene coating composition which comprises a phosphate, preferably magnesium or aluminium phosphate, and orthophosphoric acid in an amount sufficient to dissolve said phosphate.

JP-A-75-08829 (Chem. Abstr. 83, 81473v (1975)) describes fluoropolymer primer compositions prepared by mixing fluoropolymer dispersions with mineral acid metal salt, ammonia, phosphoric acid and optionally mineral acid ammonium salt. Examples of mineral acid metal salts are aluminium sulfate and phosphate, ferric sulfate and nitrate, and MgHPO₄.

Thus, it is an object of the present invention to provide a coating layer acting as primer, which is endowed with a very high adhesion to the substrate, is free from high toxicity components, is safe and easy to apply to the article to be coated.

A coating layer exhibiting such features can be prepared by using the composition according to the invention, which comprises an aqueous dispersion of a fluorinated polymer containing, in defined ratios, phosphate anions, anions of various mineral acids, in particular NO₃⁻, SO₄⁻⁻, Cl⁻, and an aqueous solution of Mg²⁺ and/or Mn²⁺, said composition having an acid pH ranging from 0 to 3.

The aqueous polymer dispersion is stabilized with non-ionic surfactants, conventionally utilized for this purpose, in particular polyoxyethylated alkylphenols having 8-90 moles of ethylene oxide per mole of phenol.

The amount of phosphate ions in the aqueous composition must be such that the weight ratio of phosphorus corresponding to the phosphate and dry polymer ranges from 0.005/1 to 0.15/1, preferably from 0.02/1 to 0.08/1. Another essential ratio is that between Mg⁺⁺ ions and/or Mn⁺⁺ ions and the phosphate anion, which must range (expressed in atoms of Mg and/or Mn and atoms of P) from 0.5/1 to 2/1, preferably from 0.7/1 to 1.2/1.

The composition according to the invention can be prepared by starting from an aqueous solution containing phosphate ions, NO₃⁻ or Cl⁻ or SO₄⁻⁻ ions and Mg⁺⁺ ions and/or Mn⁺⁺ ions, in such amounts as to satisfy the Mg⁺⁺ (and/or Mn⁺⁺)/phosphate ratio indicated hereinabove. This solution is then admixed with the aqueous dispersion of the fluorinated polymer in such a weight ratio that in the resulting mixture the amount of phosphate ion with respect to the polymer present therein is such as to fall within the abovesaid limits. The aqueous dispersion will contain a polymer amount preferably ranging from 30% to 70% by weight and it shall be stabilized with suitable surfactants, in particular with those of the non-ionic type specified above.

The aqueous solution of the metal cations and of the phosphate ions and of other anions of mineral acids can be prepared by starting from a phosphoric acid solution at a concentration of from 0.5 to 5 M, preferably from 1 to 3 M, and by addition of salts, oxides or hydroxides of Mg and/or Mn in such amounts that the atomic ratio between Mg and/or Mn and phosphorus will range from 0.5/1 to 2/1.

If Mg and/or Mn are added as oxides, hydroxides or carbonates, they can suitably be dissolved in mineral acids other than phosphoric acid, such as, for example, nitric, hydrochloric and sulphuric acids, prior to addition to the phosphoric acid solution, or they can be directly dissolved in phosphoric acid, which has previously been added to mineral acids.

If Mn and/or Mg are added as salts of mineral acids, they can either be directly added to the phosphoric acid solution or they can be dissolved in water or in mineral acid solutions and subsequently added to the phosphoric acid solution, taking care, in the latter case, to not dilute the total concentration of phosphate ions in the solution above the limit of 0.5 M.

The ratio in gram equivalents between Mg(II) and/or Mn(II) and the mineral acids different from phosphoric acid is not critical with regard to the performance of the composition of the invention; however, it should preferably be in the range of from 0.5/1 to 2/1.

Also the type of mineral acid, different from phosphoric acid, which is added to the solution, is not particularly critical; however, if Mg(II) is used as cation, it is preferable to utilize a mixture of hydrochloric acid and nitric acid such that the ratio in gram equivalents between Mg(II), chloride ions and nitrate ions is 1:x:y, wherein x and y are < 1.

The composition according to the invention is applied by using known methods and devices to the metal substrate to be coated which has previously been sandblasted and degreased. The coating composition can be applied by spraying, by pouring, by using a roller and the like, in order to provide a film which, after drying and sintering (or melting) of the polymer, exhibits a thickness of from 1 to 20 µm, preferably from 3 to 10 µm.

The heat-treatment of the applied film comprises a first step of drying at a not very high temperature (lower than 100°C) which is followed by a thermal treatment at high temperature, up to 420°C and preferably up to 400°C, in the case of PTFE, in order to cause the polymer to sinter or to partially melt.

The resulting coating adheres to the metal substrate and can be coated with a finish of conventional composition.

The following examples are given merely to illustrate possible embodiments of the invention.

### EXAMPLE 1

A binder solution was prepared as follows:
24 g of (MgCO₃)₄ . Mg(OH)₂ . 5H₂O were solubilized in a solution containing 34.5 g of H₃PO₄ at 85%, 7.8 g of HCl at 37%, 23.5 g of HNO₃ at 65% and 10 g of deionized water; then the whole was filtered and diluted to 100 g with deionized water. In this solution, the Mg/P atomic ratio was equal to 0.8/1. The primer composition was obtained by mixing in the following order:

| | |
|---|---|
| suspension of PTFE at 60% by weight, dispersed with 3.5% Triton® X-100 | 41 g |
| aqueous suspension of TiO₂ at 37.5% by weight, dispersed with sodium lauryl sulphate | 10 g |
| deionized water | 29 g |
| binder solution as prepared above | 20 g |

In this composition, the P/PTFE weight ratio was equal to 0.075/1. This composition was sprayed onto an aluminium substrate previously sandblasted and degreased with toluene, dried at 60°C and sintered at 390°C for 8 minutes. The resulting film, having a thickness of 8 µm, was subjected to the adhesion test described in standard ASTM D 3359-78, using a suitable squaring device (side of a single square = 1 mm, for a total of 100 small squares): the adhesion degree was equal to 5, according to the scale indicated in said standard.

Onto an aluminium sheet coated in the above manner there was applied, by using of a spray gun, a finish layer having the following composition:

| | |
|---|---|
| dispersion of PTFE at 60% (the same as used for preparing the primer composition) | 70 g |
| aqueous suspension of TiO₂ at 50% by weight, dispersed with sodium lauryl sulphate | 10 g |
| deionized water | 7.7 g |
| sodium lauryl sulphate | 1.3 g |
| silicone resin (dissolved in toluene at 70% by weight) | 4 g |
| toluene | 7 g |

After drying at 60°C and sintering at 390°C, a film having a total thickness of 40 µm was obtained. Cuts were made in said film in order to obtain a grid of 36 small squares, each of them having sides of 1 mm. Onto this grid, a strip of adhesive tape was applied, which, when being stripped off, did not remove film portions.

### EXAMPLE 2

62 g of an aqueous solution of Mn(NO₃)₂ at 50% were added to 14 g of H₃PO₄ at 85% and 24 g of deionized water (Mn/P atomic ratio = 1.42/1).
Then, a primer composition was prepared by mixing in the following order:

| | |
|---|---|
| dispersion of PTFE at 60% | 45 g |
| suspension of TiO₂ at 37.5% | 11 g |
| deionized water | 22 g |
| binder solution of Mn as prepared above | 22 g |

In this composition, the P/PTFE weight ratio was equal to 0.031/1.
The coating obtained on an aluminium substrate by operating according to the modalities described in example 1 exhibited an adhesion degree equal to 5.
A finishing layer having the same composition as the finishing layer of example 1 was applied on a substrate treated in the above manner. In this case too, the adhesion of the film obtained (thickness = 40 µm) was good.

### EXAMPLE 3

58 g of Mg(NO₃)₂.6H₂O and 16 g of MgCl₂.6H₂O were dissolved in 80 g of deionized water; to this solution, 103 g of H₃PO₄ at 85% and 15 g of (MgCO₃)₄.Mg(OH)₂.5H₂O were added. After complete dissolution, the whole was filtered and diluted to 300 g with deionized water (Mg/P atomic ratio = 0.51/1). The primer composition was prepared according to the modalities described in example 1, thus obtaining a composition in which the P/PTFE weight ratio was equal to 0.075/1.
The adhesion of the film was equal to the one determined in the preceding examples, as regards both the film of the primer composition and the coated film of the finishing layer.

### EXAMPLE 4

A composition like the one described in example 1 was obtained and sprayed onto sandblasted aluminium. After water evaporation at 60°C, the resulting film was dried at a temperature of 280°C; then, the finishing layer was applied according to usual modalities and sintering was carried out at 390°C for 9 minutes. Also in this case, a coating adhering to the substrate was obtained.

### EXAMPLE 5

58 g of Mg(NO₃)₂.6H₂O and 15 g of MgCl₂.H₂O were dissolved in a mixture composed of 80 g of deionized water and 52.6 g of H₃PO₄ at 85%; 15 g of (MgCO₃)₄.Mg(OH)₂.5H₂O were then dissolved; after complete dissolution the whole was filtered and diluted to 300 g with deionized water. In this way, a solution was obtained, which had a Mg/P atomic ratio equal to 1/1. By mixing said solution with the usual dispersion of PTFE at 60%, with water and with the TiO₂ dispersion in the ratios specified in example 1, a primer composition was obtained (P/PTFE weight ratio = 0.038/1), which provided, after application to the aluminium substrate, a film having good adhesion characteristics (degree: 5). The finish, which was applied according to the usual modalities, showed a performance analogous to those of the preceding examples.

### EXAMPLE 6

61.3 g of Mn(NO₃)₂ at 50% in water were added to 19.7 g of H₃PO₄ at 85% and diluted to 100 g with deionized water. In said solution the Mn/P atomic ratio was equal to 1/1. The primer composition was prepared according to example 2 (P/PTFE weight ratio = 0.043/1) and was sprayed onto an aluminium substrate. After sintering at 390°C, a film having an adhesion degree equal to 5 was obtained.
The finishing layer was applied with the same composition and modalities as in the preceding examples, thus obtaining a film endowed with good adhesion properties.

### EXAMPLE 1A - comparative test

A solution having the following composition was prepared:

| | |
|---|---|
| Ca(NO₃)₂.4H₂O | 20 g |
| H₃PO₄ at 85% | 10.3 g |
| deionized H₂O | 25 g |

In this solution, the Ca/P atomic ratio was equal to 0.98/1.

The primer composition was prepared as follows:

| | |
|---|---|
| suspension of PTFE at 60% by weight | 41 g |
| suspension of TiO₂ at 40% by weight dispersed with sodium lauryl sulphate | 10 g |
| binder solution as prepared above | 32 g |
| deionized H₂O | 17 g |

In this composition, the P/PTFE weight ratio was equal to 0.066/1.

After application of this paint to the aluminium substrate and after sintering at 400°C for 7 minutes (resulting thickness = 6 µm), the adhesion of the coating was poor.

### EXAMPLE 2A - comparative test

A primer composition having the following composition was prepared:

| | |
|---|---|
| (MgCO₃)₄.Mg(OH)₂.5H₂O | 4.5 g |
| H₃PO₄ at 85% | 14.8 g |
| suspension of TiO₂ at 40% in water | 10 g |
| suspension of PTFE at 60% by weight | 60 g |
| deionized H₂O | 10.7 g |

The ratios were as follows:
Mg/P (atomic) = 0.359/1
P/PTFE (by weight) = 0.11/1.

The paint was applied, by using a film spreading device, on an aluminium substrate in order to obtain a coating which, after sintering at 400°C for 7 minutes, exhibited a thickness of 7 µm.

Onto the above film, a finishing layer having the same composition as the finishing layer of example 1 was applied; said layer exhibited, after sintering at 400°C, a total thickness of 40 µm.

The film so obtained did not exhibit a good adhesion to the metal substrate.

## Claims

1. Composition suitable for coating a metal surface, comprising an aqueous dispersion of a tetrafluoroethylene homopolymer and/or copolymer and an aqueous solution of Mg²⁺ and/or Mn²⁺ ions, said composition having a pH of from 0 to 3 and containing phosphate ions as well as other anions of mineral acids, the amount of phosphate ions being such that the weight ratio P/dry polymer ranges from 0.005/1 to 0.15/1 and the atomic ratio (Mg and/or Mn)/P ranges from 0.5/1 to 2/1.

2. The composition according to claim 1, comprising an aqueous dispersion of polytetrafluoroethylene.

3. The composition according to claim 1 or 2, wherein said other anions of mineral acids are selected from NO₃⁻, SO₄⁻⁻ and Cl⁻.

4. The composition according to one or more of claims 1 to 3, wherein the weight ratio P/dry polymer ranges from 0.02/1 to 0.08/1.

5. Use of the composition of any one of claims 1 to 4 for forming a coating layer which acts as primer.

6. Use of the composition of any one of claims 1 to 4 for forming coating layers on metal surfaces, preferably of iron, aluminium or alloys thereof.

## Patentansprüche

1. Zusammensetzung, die für die Beschichtung von Metalloberflächen geeignet ist, umfassend eine wäßrige Dispersion eines Tetrafluorethylen-Homopolymeren und/oder -Copolymeren und eine wäßrige Lösung von Mg²⁺ und/oder Mn²⁺-Ionen, wobei diese Zusammensetzung einen pH von 0 bis 3 aufweist und Phosphationen ebenso wie andere Anionen von Mineralsäuren enthält, wobei die Menge an Phosphationen derart ist, daß das Gewichtsverhältnis P/trockenes Polymer im Bereich von 0,005/1 bis 0,15/1 liegt und das Atomverhältnis (Mg und/oder Mn)/P im Bereich von 0,5/1 bis 2/1 liegt.

2. Zusammensetzung nach Anspruch 1, umfassend eine wäßrige Dispersion von Polytetrafluorethylen.

3. Zusammensetzung nach Anspruch 1 oder 2, worin die anderen Anionen von Mineralsäuren aus NO₃⁻, SO₄⁻⁻ und Cl⁻ ausgewählt sind.

4. Zusammensetzung nach einem oder mehr der Ansprüche 1 bis 3, worin das Gewichtsverhältnis P/trockenes Polymer im Bereich von 0,02/1 bis 0,08/1 liegt.

5. Verwendung der Zusammensetzung nach irgendeinem der Ansprüche 1 bis 4 zur Bildung einer Überzugsschicht, die als Primer wirkt.

6. Verwendung der Zusammensetzung nach irgendeinem der Ansprüche 1 bis 4 zur Bildung von Überzugsschichten auf Metalloberflächen, vorzugsweise aus Eisen, Aluminium oder Legierungen davon.

## Revendications

1. Composition convenant pour le revêtement d'une surface métallique, comprenant une dispersion aqueuse d'un homopolymère et/ou d'un copolymère de tétrafluoroéthylène et une solution aqueuse d'ions Mg²⁺ et/ou Mn²⁺, cette composition ayant un pH de 0 à 3 et contenant des ions phosphate ainsi que d'autres anions d'acides minéraux, la quantité d'ions phosphate étant telle que le rapport pondéral P/polymère sec est compris entre 0,005/1 et 0,15/1 et le rapport atomique (Mg et/ou Mn)/P est compris entre 0,5/1 et 2/1.

2. La composition selon la revendication 1, comprenant une dispersion aqueuse de polytétrafluoroéthylène.

3. La composition selon la revendication 1 ou 2, caractérisée en ce que les autres anions ou acides minéraux sont choisis parmi NO₃⁻, SO₄⁻⁻ et Cl⁻.

4. La composition selon l'une ou plusieurs des revendications 1 à 3, caractérisée en ce que le rapport pondéral P/polymère sec est compris entre 0,02/1 et 0,08/1.

5. Utilisation d'une composition selon l'une quelconque des revendications 1 à 4 pour la formation d'une couche de revêtement qui agit comme primère.

6. Utilisation d'une composition selon l'une quelconque des revendications 1 à 4 pour la formation de couches de revêtement sur des surfaces métalliques, de préférence en fer, en aluminium ou en leurs alliages.
